# EUROPÄISCHE PATENTANMELDUNG

(11) **EP 0 825 237 A1**
(43) Veröffentlichungstag der Anmeldung: **25.02.1998**
(21) Anmeldenummer: 97111143.0
(22) Anmeldetag: 03.07.1997
(51) Int. Cl.: C09D 5/03, C08G 18/80

(54) **Mit Acetophenonoxim blockierte PUR-Pulverlacke sowie deren Verwendung**

(30) Priorität: 23.08.1996 DE 19634054
(71) Anmelder: HÜLS AKTIENGESELLSCHAFT, 45764 Marl (DE)
(72) Erfinder: Gras, Rainer, Dr., 44879 Bochum (DE); Wolf, Elmar, Dr., 45661 Recklinghausen (DE)

(57) **Zusammenfassung**

Lagerstabile, in der Hitze härtbare transparente und pigmentierte PUR-Pulverlacke hoher Reaktivität, im wesentlichen enthaltend
a) mindestens eine mit Acetophenonoxim partiell oder total blockierte Isocyanatkomponente,
b) hydroxylgruppenhaltige Polymere und
c) gegebenenfalls übliche Hilfs- und Zuschlagsstoffe.

## Beschreibung

Gegenstand der vorliegenden Erfindung sind transparente und pigmentierte, in der Hitze härtbare, wetterstabile Polyurethan (PUR)-Pulverlacke hoher Reaktivität.

Die Blockierung von Polyisocyanaten zum zeitweisen Schutz der NCO-Gruppen ist eine seit langem bekannte Arbeitsmethode und wird z. B. im Houben-Weyl, Methoden der organischen Chemie XIV 2, Seite 61 ff. beschrieben.

Für die Herstellung von PUR-Pulvern hat sich zur Blockierung der NCO-Komponente aus der Vielzahl von Blockierungsmitteln ε-Caprolactam durchgesetzt.

In der DE-AS 21 05 777 werden aufgrund einer Reihe von Vorteilen mit ε-Caprolactam blockierte Addukte des Isophorondiisocyanats (IPDI) als Härter für Pulverlacke hervorgehoben.

Die DE-OS 25 42 191 betrifft blockierte Poyisocyanate aus IPDI, ε-Caprolactam und einem Polyol, das ein Gemisch aus einem Diol und Triol ist, sowie deren Verwendung zur Herstellung von in der Hitze härtbaren pulverförmigen Überzugsmassen.

In den DE-OSS 27 35 497 und 28 42 641 werden pulverförmige PUR-Lacke auf Basis von Hydroxylgruppen enthaltenden Polyestern, Polyacrylaten oder Epoxidharzen beschrieben, deren Härterkomponente ein mit ε-Caprolactam blockiertes Gemisch aus IPDI-Isocyanurat und monomerem IPDI ist.

In der DE-OS 30 04 876 werden mit ε-Caprolactam blockierte Polyisocyanate beansprucht, die aus Addukten des IPDI und Polyolen in einem festgelegten OH/NCO-Verhältnis bestehen.

Der Nachteil der bekannten ε-Caprolactam blockierten Polyisocyanate ist die relativ hohe Abspalttemperatur von ca. 180 - 200 °C. Schon seit längerer Zeit ist man aus wirtschaftlichen Erwägungen sehr daran interessiert, diese Temperatur und/oder die Einbrennzeit dieser Lacke zu senken. Man hat versucht, anstelle von ε-Caprolactam Oxime einzusetzen, deren Addukte mit Isocyanaten bereits bei deutlich niedrigerer Temperatur als 170 °C thermisch gespalten werden. Bei den gehärteten Lacken, die mit Oximen versetzt sind, tritt jedoch, wie in der DE-OS 33 12 028 (S. 3, Z. 3) bzw. Powder Coatings Bulletin, Dez. 1994, S. 2 beschrieben, unerwünschte Bläschenbildung auf Außerdem ist bei diesen reaktiven Systemen, wie eigene Versuche zeigen, eine leichte Gelbfärbung, die beim Überbrennen stark zunimmt, festzustellen.

Die Aufgabe der vorliegenden Erfindung besteht darin, die Nachteile des Standes der Technik zu beheben und vor allem PUR-Bulverlacke, transparente wie pigmentierte, zur Verfügung zu stellen, die vor allem eine hohe Reaktivität auszeichnet und damit niedrige Härtungstemperaturen gestatten.

Die Aufgabe wurde durch die Lehre gemäß der Patentansprüche gelöst.

Gegenstand der vorliegenden Erfindung sind demnach lagerstabile, in der Hitze härtbare transparente und pigmentierte PUR-Pulverlacke hoher Reaktivität, im wesentlichen enthaltend
a) mindestens eine mit Acetophenonoxim partiell oder total blockierte Isocyanatkomponente,
b) hydroxylgruppenhaltige Polymere und
c) gegebenenfalls übliche Hilfs- und Zuschlagsstoffe.

Als Polyisocyanate im Sinne dieser Anmeldung sind insbesondere Diisocyanate aliphatischer und (cyclo)aliphatischer Struktur anzusehen. Statt einzelne Vertreter hier aufzuführen, wird auf die Literatur verwiesen: Houben-Weyl, Methoden der organischen Chemie, Band 14/2, S. 61 ff und J. Liebigs Annalen der Chemie, Band 562, S. 75 - 136. Bevorzugt werden in der Regel die technisch leicht zugänglichen aliphatischen und (cyclo)aliphatischen Diisocyanate mit 6 - 14 C-Atomen, insbesondere 3-Isocyanatomethyl-3.5.5-trimethylcyclohexylisocyanat (Isophorondissocyanat) und Dicyclohexylmethan-4.4'-diisocyanat. Neben den monomeren Diisocyanaten können auch die daraus hergestellten Isocyanurate eingesetzt werden, die nach bekannten Methoden herstellbar sind (vgl. z. B. DE-PSS 26 44 684, 28 21 109, 29 16 201).

Schließlich sind als Polyisocyanate im Sinne der vorliegenden Erfindung auch solche Addukte zu verstehen, die durch Umsetzung der obengenannten monomeren, überwiegend bifunktionellen Polyisocyanate mit den in der Isocyanatchemie gebräuchlichen Kettenverlängerungsmitteln erhalten werden. Derartige Verbindungen werden beispielsweise in der DE-OS 27 07 660 aufgeführt. Bevorzugt werden Polyole, deren Molekulargewicht unter 350 liegt, insbesondere Ethylenglykol und Trimethylolpropan. Die Kettenverlängerungsmittel sollten nur in solchen Mengen mit den Polyisocyanaten umgesetzt werden, daß das resultierende Addukt im Durchschnitt mindestens zwei Isocyanatgruppen aufweist.

Die im erfindungsgemäßen Verfahren eingesetzten Härter zeichnen sich durch einen Gehalt an blockierten NCO-Gruppen von 9 - 20 %, vorzugsweise 11 - 15 %, aus. Ihr Schmelzpunkt liegt in einem weiten Bereich von ca. 60 - 150°C. Sie eignen sich zur Herstellung von lösungsmittelhaltigen 1K-PUR-Einbrennlacken. Die Blockierung der Polyisocyanate kann sowohl in Lösungsmitteln als auch in Substanz des vorgelegten Polyisocyanats durchgeführt werden.

Als Lösungsmittel kommen nur solche in Frage, die mit den Polyisocyanaten nicht reagieren, beispielsweise Ketone wie Aceton, Methyl ethylketon, Methylisobutylketon, Cyclopentanon Cyclohexanon; Aromaten wie Toluol, Xylol, Chlorbenzol, Nitrobenzol; cyclische Ether wie Tetrahydrofuran; Ester wie Methylacetat, n-Butylacetat; aliphatische Chlorkohlenwasserstoffe wie Chloroform, Tetrachlorkohlenstoff sowie aprotische Lösungsmittel wie Dimethylformamid, Dimethylacetamid, Dimethylsulfoxid.

Das Blockierungsmittel wird in einem solchen Verhältnis zum Polyisocyanat eingesetzt, daß auf eine NCO-Gruppe 0,5 - 1 Mol Acetophenonoxim kommt.

Die Umsetzung des Polyisocyanats mit dem Acetophenonoxim wird üblicherweise im Temperaturbereich zwischen 0 und 150°C durchgeführt. Um die Blockierung schnell und vollständig durchzuführen, werden höhere Reaktionstemperaturen bevorzugt. Andererseits muß die Reaktionstemperatur um mindestens 10°C unter der Abspalttemperatur des blockierten Polyisocyanats liegen. Bevorzugt wird der Temperaturbereich, der um 15 bis 35 °C unter der Abspalttemperatur liegt, d. h. etwa bei 120°C.

Bei der Blockierungsreaktion können Katalysatoren, die die Isocyanat-Polyaddition begünstigen, wie z. B. Zinn-II-octoat, Dibutylzinndilaurat, tertiäre Amine u. a., zugegen sein.

Als hydroxylgruppenhaltige Polymere kommen insbesondere Polyester Epoxidharze sowie hydroxylgruppenhaltige Acrylate mit einem Molelculargewicht von 800 bis 40 000 in Betracht.

Für die Pulverlacke eignen sich bevorzugt die Polyester der Terephthalsäure mit den Alkoholen Hexandiol-1.6, Neopentylglykol, 1.4-Dimethanolcyclohexan und 2.2.2-Trimethylolpropan.

Die einsetzbaren Epoxidharze sind in der DE-OS 29 45 113, Seite 12, Zeile 1 bis Seite 13, Zeile 26, aufgeführt.

Geeignete Polyacrylate werden in der DE-OS 30 30 539, Seite 14, Zeile 21 bis Seite 15, Zeile 26, beschrieben.

Die hydroxylgruppenhaltigen Polymeren werden in einer solchen Menge eingesetzt, daß das OH/NCO-Verhältnis 1:n mit 1,2 >n> 0,8, bevorzugt 1,05 ≥n≥ 0,95, beträgt.

Zu den üblichen Hilfs- und Zusatzstoffen zählt man Verlaufsmittel, Pigmente, Farbstoffe, Füllstoffe, Katalysatoren, Thixotropiermittel, UV- und Oxidationsstabilisatoren. Die Menge dieser Stoffe kann, bezogen auf die Menge des festen Bindemittels, innerhalb eines weiten Bereichs schwanken.

Die Herstellung der PUR-Pulverlacke erfolgt z. B., indem man die festen hydroxylgruppenhaltigen Polyester und/oder Epoxidharze und die blockierten Polyisocyanate, gegebenenfalls nach Zugabe der gewünschten Lackzusätze, in den genannten Mengenverhältnissen mischt und bei erhöhter Temperatur extrudiert. Diese Temperatur muß oberhalb des Schmelzpunktes von Polyester/Epoxid und blockiertem Polyisocyanat, aber unterhalb der Aufspalttemperatur der Härtungsmittel liegen.

Nach dem Extrudieren wird abgekühlt und auf eine Korngröße < 250 µm, vorzugsweise < 100 µm gemahlen. Anschließend werden gegebenenfalls die größeren Fraktionen durch Siebung entfernt und zur Mühle zurückgeführt.

Die Applikation des Pulverlackes auf die zu überziehenden Körper kann nach bekannten Methoden erfolgen, z. B. durch elektrostatisches Pulverspritzen, Wirbelsintern oder elektrostatisches Wirbelsintern. Anschließend werden die lackierten Gegenstände 60 bis 1 Minute im Temperaturbereich zwischen 140 und 250 °C, vorzugsweise 20 bis 5 Minuten zwischen 150 und 200 °C, ausgehärtet.

Zur Beschichtung mit den erfindungsgemäßen PUR-Pulverlacken eignen sich alle Substrate, die die angegebenen Härtungstemperaturen ohne Einbuße der mechanischen Eigenschaften vertragen, z. B. Metalle, Glas, Keramik oder Kunststoff.

Die erhaltenen Einbrenn- und Pulverlacke zeichnen sich gegenüber den bekannten durch ein günstigeres Verhältnis von Einbrenntemperatur, Härtungszeit und bestimmten Qualitätsanforderungen aus.

### Experimenteller Teil

### 1. Herstellung der Härterkomponente

### Beispiel 1

Zu 222 Gew.-T. IPDI wurden bei 100°C 270 Gew.-T. Acetophenonoxim so zugegeben, daß die Temperatur nicht über 120°C stieg. Nach Beendigung der Acetophenonoximzugabe wurde zur Vervollständigung der Reaktion das Reaktionsgemisch noch 0,5 h bei 120°C gehalten.

| | |
|---|---|
| freier NCO-Gehalt: | 0,2 % |
| Gesamt-NCO-Gehalt: | 16,7 % |
| Schmelzpunkt: | 55 - 58 °C |

### Beispiel 2

Zu 444 Gew.-T. IPDI wurden bei 80 °C 106 Gew.-T. Diethylenglykol innerhalb von ca. 1 h zugetropft. Das Reaktionsgemisch wurde dann so lange bei 80°C weiter erhitzt, bis der NCO-Gehalt von 15,3 % erreicht war. Danach wurden 270 Gew.-T. Acetophenonoxim bei 110°C portionsweise zugegeben und nach Beendigung der Acetophenonoximzugabe noch so lange bei 120°C weiter erhitzt, bis der NCO-Gehalt von 0,2 % erreicht war.

| | |
|---|---|
| freier NCO-Gehalt: | 0,2 % |
| Gesamt-NCO-Gehalt: | 10,1 % |
| Schmelzpunkt: | 77 - 83 °C |

Die in der nachfolgenden Tabelle 1 aufgeführten Beispiele wurden in Analogie zu dem in den Beispielen 1 und 2 beschriebenen Verfahren hergestellt.

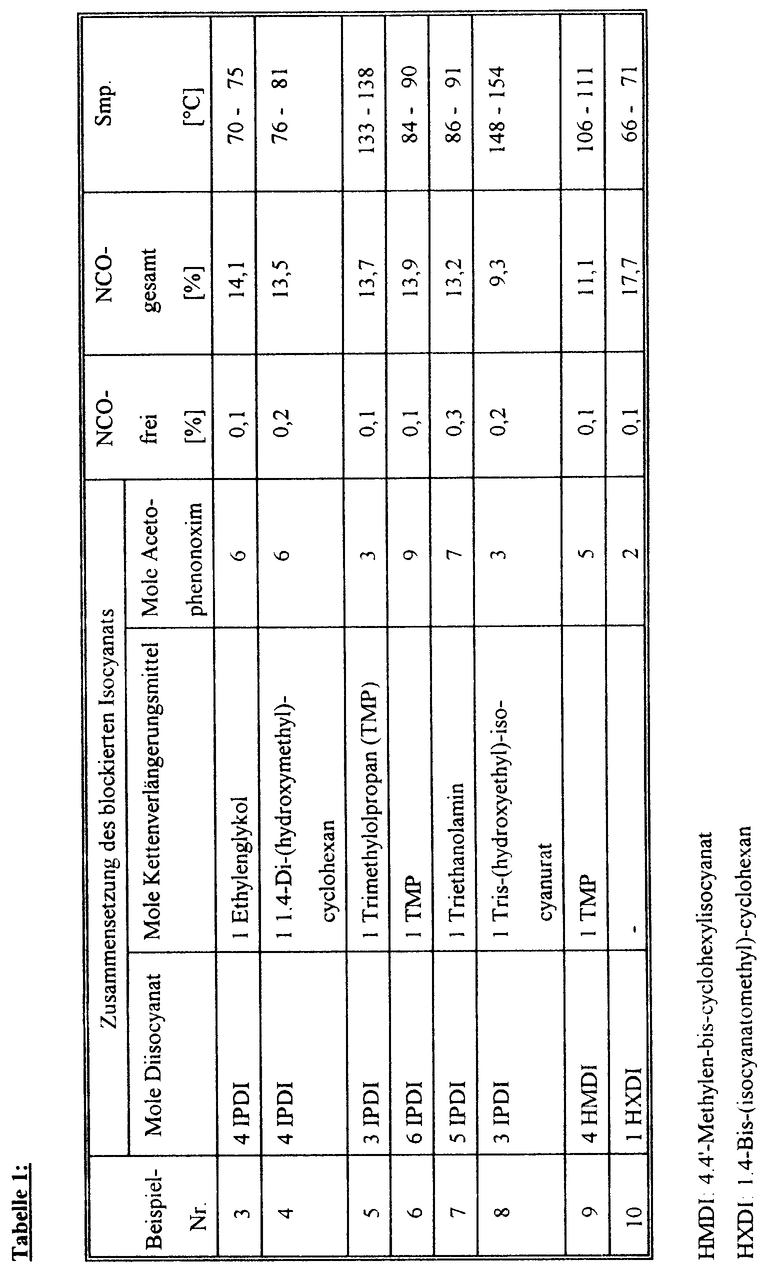

### Beispiel 11

a) Zu 1000 Gew.-T. IPDI wurden bei 80 °C 3 Gew.-T. DABCO TMR unter intensivem Rühren gegeben. Nach einer Induktionsperiode von ca. 1 min stieg die Temperatur der Reaktionsmischung innerhalb von ca. 3 min auf 136 °C. Nach dem Erreichen des Temperaturmaximums ist die Reaktion beendet. Weiteres Erhitzen bei 130 °C bewirkt keine Veränderung des NCO-Gehaltes. Nach dem Abkühlen auf Raumtemperatur hatte das Reaktionsgemisch einen NCO-Gehalt von 26 %.
b) Zu 1000 Gew.-T. des unter a) beschriebenen partiell trimerisierten IPDI mit einem NCO-Gehalt von 26 % wurden bei 110 °C 836 Gew.-T. Acetophenonoxim portionsweise so zugegeben, daß die Temperatur der Reaktionsmischung nicht über 120 °C stieg. Nach Beendigung der Acetophenonoximzugabe wurde zur Vervollständigung der Reaktion noch ca. 0,5 h bei 120 °C weiter erhitzt.

| | |
|---|---|
| freier NCO-Gehalt: | 0,2 % |
| Gesamt-NCO-Gehalt: | 13,8 % |
| Schmelzpunkt: | 88 - 91 °C |

### Beispiel 12 (Vergleichsbeispiel)

1000 Gew.-T. des unter 11 a beschriebenen partiell trimerisierten IPDI wurden in Analogie zu 11 b mit 538 Gew.-T. MEK-oxim umgesetzt.

| | |
|---|---|
| freier NCO-Gehalt: | 0,1 % |
| Gesamt-NCO-Gehalt: | 16,7 % |
| Schmelzpunkt: | 53 - 61 °C |

### Beispiel 13 (Vergleichsbeispiel)

Zu 1000 Gew.-T. des unter 11 a beschriebenen partiell trimerisierten IPDI mit einem NCO-Gehalt von 26 % wurden bei 120 °C 700 Gew.-T. ε-Caprolactam portionsweise so zugegeben, daß die Temperatur der Reaktionsmischung nicht über 130 °C stieg.

Nach Beendigung der ε-Caprolactamzugabe wurde zur Vervollständigung der Umsetzung noch ca. 2 h bei 120 °C weiter erhitzt.

| | |
|---|---|
| freier NCO-Gehalt: | 0,5 % |
| Gesamt-NCO-Gehalt: | 15,0 % |
| Schmelzpunkt: | 86 - 89 °C |

### B Polyester

Die folgende Tabelle 2 enthalt Beispiele über die zur Formulierung von PUR-Pulverlacken am Markt erhältlichen Polyester.

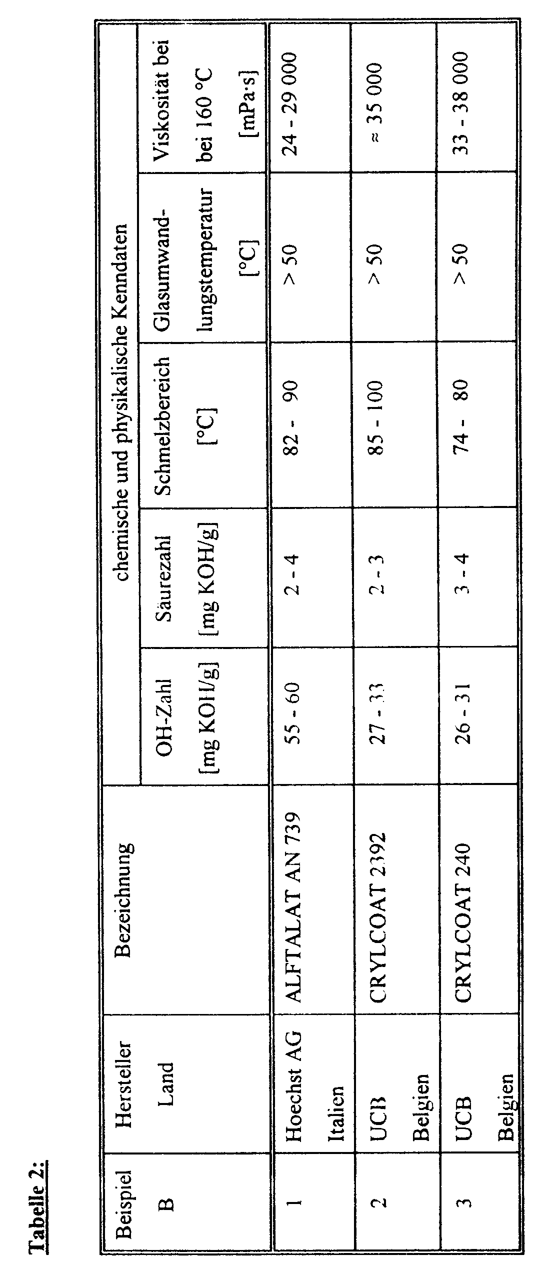

### C Polyurethan-Pulverlacke

### Allgemeine Herstellungsvorschrift

Die zerkleinerten Produkte - blockierte Polyisocyanate (Vernetzer), Polyester, Verlaufsmittel-, ggf. Katalysator-Masterbatch - werden ggf. mit dem Weißpigment in einem Kollergang innig vermischt und anschließend im Extruder bis maximal 130 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert und in einem Umlufttrockenschrank bei Temperaturen zwischen 160 und 180 °C eingebrannt.

### Verlaufsmittel-Masterbatch

Es werden 10 Gew.-% des Verlaufsmittels - ein handelsübliches Copolymer von Butylacrylat und 2-Ethylhexylacrylat - in dem entsprechenden Polyester in der Schmelze homogenisiert und nach dem Erstarren zerkleinert.

### Katalysator-Masterbatch

Es werden 5 Gew.-% des Katalysators - DBTL - in dem entsprechenden Polyester in der Schmelze homogenisiert und nach dem Erstarren zerkleinert.

Die Abkürzungen in den folgenden Tabellen bedeuten:
- SD: = Schichtdicke in µm
- ET: = Tiefung nach Erichsen in mm (DIN 53 156)
- GS: = Gitterschnittprüfung (DIN 53 151)
- GG 60 °∢: = Messung des Glanzes nach Gardner (ASTM-D 5233)
- Imp. rev.: = Impact reverse in g·m
- HK: = Härte nach König in sec (DIN 53 157)

### C 1 Pigmentierte Pulverlacke - mit glänzender Oberfläche

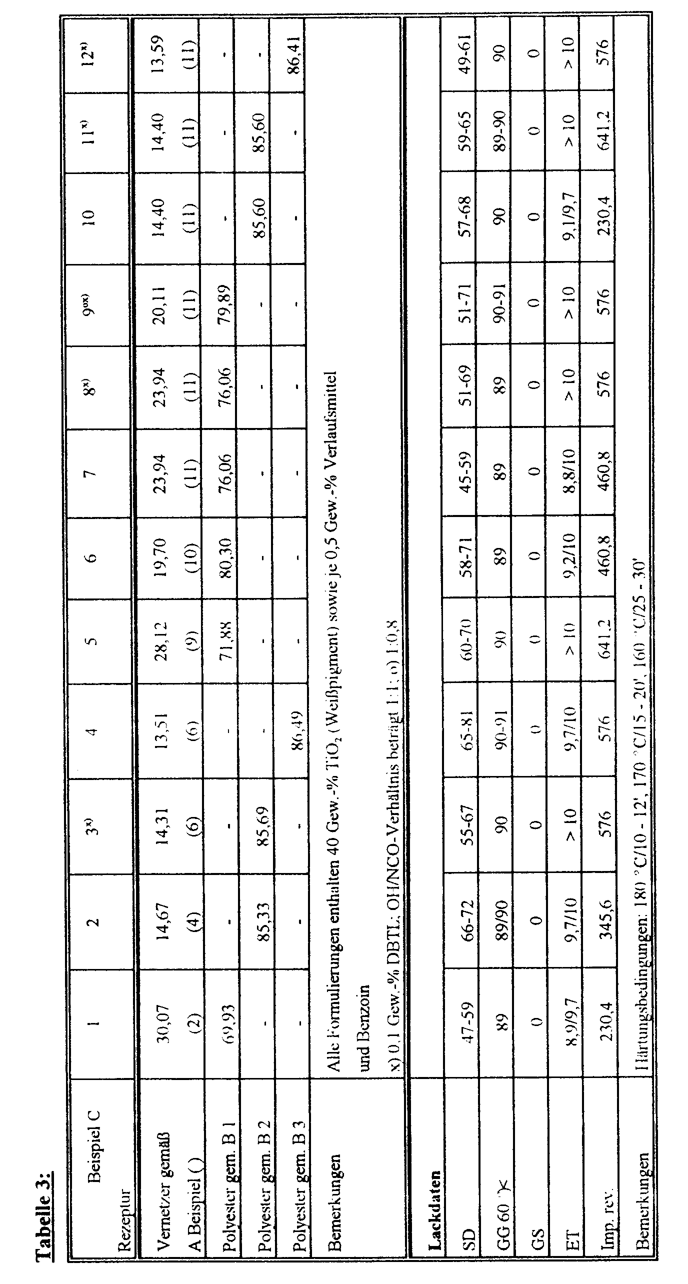

### C 2 Transparente Pulverlacke

Nach dem beschriebenen Verfahren wurden auch die transparenten Pulverlacke hergestellt, appliziert und zwischen 150 und 170 °C eingebrannt.

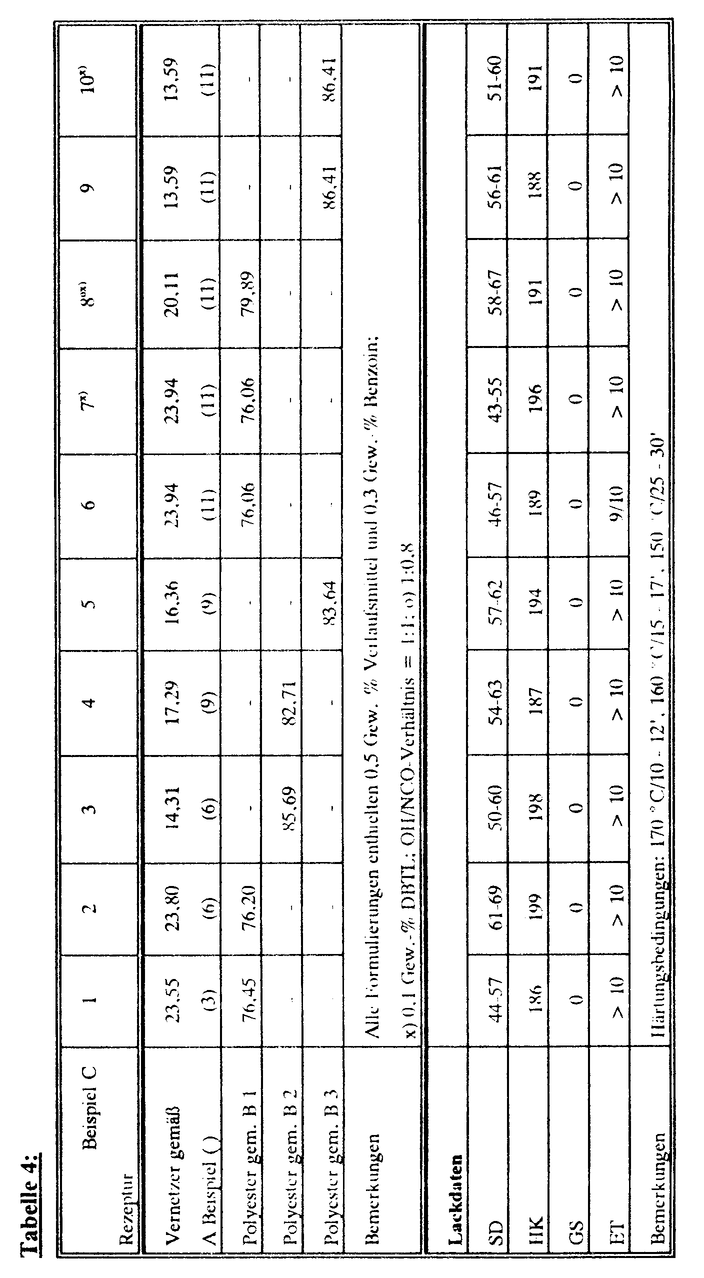

### C 3 PUR-Pulverlacke - Vergleichsbeispiele

### Beispiel 1

Aufgrund des niedrigen Schmelzbereiches (53 - 61 °C) ist der Vernetzer gem. Beispiel A 12 prinzipiell zur Herstellung von transparenten bzw. pigmentierten Pulverlacken nach der herkömmlichen Pulverlack-Technologie nicht geeignet. Bereits der Vernetzer selbst backt beim Lagern, hat also keine ausreichende Lagerstabilität bei Raumtemperatur.

Daraus hergestellte sprühfertige Pulverlacke erfüllen nicht die DIN-Vorschrift 55990, Teil 7 - "Bestimmung der Blockfestigkeit". Des weiteren neigen die Beschichtungen von Schaumbildung bis zu Nadelstichbildung, d. h. die Beschichtungsoberfläche ist nicht einwandfrei. Die Vergilbung der transparenten und pigmentierten Lackfilme lag auf einem höheren Niveau.

### Beispiel 2

ε-Caprolactam-blockierte Polyisocyanate, also auch der Vernetzer gem. Beispiel A 13, sind weniger reaktiv, d. h. für die Härtungsbedingungen derartiger Beschichtungen sind entweder die Temperaturen höher oder die Einbrennzeiten länger, z. B. 200 °C / 12 - 15', 180 °C / 15 - 20', 170 °C / 25 - 30' für pigmentierte Beschichtung sowie 200 °C / 8 - 10', 180 °C / 12 - 15', 170 °C / 18 - 22', 160 ° C/25 - 30' für transparente.

## Patentansprüche

1. Lagerstabile, in der Hitze härtbare transparente und pigmentierte PUR-Pulverlacke hoher Reaktivität, im wesentlichen enthaltend
a) mindestens eine mit Acetophenonoxim partiell oder total blockierte Isocyanatkomponente,
b) hydroxylgruppenhaltige Polymere und
c) gegebenenfalls übliche Hilfs- und Zuschlagsstoffe.

2. PUR-Pulverlacke nach Anspruch 1,
dadurch gekennzeichnet,
daß als Isocyanatkomponente Addukte aus Diisocyanaten und Polyolen mit einem Molekulargewicht unter 350 enthalten sind.

3. PUR-Pulverlacke nach Anspruch 1,
dadurch gekennzeichnet,
daß als Isocyanatkomponente oligomere Diisocyanate, gegebenenfalls im Gemisch mit monomeren Diisocyanaten, enthalten sind.

4. PUR-Pulverlacke nach den Ansprüchen 1 und 3,
dadurch gekennzeichnet,
daß als oligomeres Diisocyanat ein trimerisiertes Diisocyanat enthalten ist.

5. PUR-Pulverlacke nach den Ansprüchen 1 bis 4,
dadurch gekennzeichnet,
daß als Isocyanatkomponente Isophorondiisocyanat, 4.4'-Methylen-bis-cyclohexylisocyanat und 1.4-Bis(isocyanatomethyl)-cyclohexan enthalten sind.

6. PUR-Pulverlacke nach den Ansprüchen 1 bis 5,
dadurch gekennzeichnet,
daß die Isocyanatkomponente einen Gehalt an blockierten NCO-Gruppen von 9 - 20 %, vorzugsweise 11 - 15 %, aufweist.

7. PUR-Pulverlacke nach den Ansprüchen 1 bis 6,
dadurch gekennzeichnet,
daß die Isocyanatkomponente so blockiert vorliegt, daß auf ein Äquivalent NCO 0,5 - 1 mol Acetophenonoxim kommen.

8. PUR-Pulverlacke nach den Ansprüchen 1 bis 7,
daß als hydroxylgruppenhaltige Polymere Polyester, Epoxidharze sowie hydroxylgruppenhaltige Acrylate mit Molekulargewichten von 800 bis 40 000 enthalten sind.

9. PUR-Pulverlacke nach den Ansprüchen 1 bis 8,
daß das OH/NCO-Verhältnis 1:n mit 1,2 >n> 0,8, bevorzugt 1,05 ≥n≥ 0,95, beträgt.

10. Verwendung von lagerstabilen, in der Hitze härtbaren transparenten und pigmentierten PUR-Pulverlacken hoher Reaktivität aus partiell oder total mit Acetophenonoxim blockierten Polyisocyanaten, einem hydroxylgruppenhaltigen Polyester sowie gegebenenfalls den in der PUR-Chemie üblichen Hilfs- und Zuschlagsstoffen zum Beschichten beliebiger Substrate, insbesondere von hitzeempfindlichen Werkstücken.
